**Europäisches Patentamt**

**European Patent Office**

**Office européen des brevets**

(19)

(11) Veröffentlichungsnummer: **0 000 361**
**B1**

(12) # EUROPÄISCHE PATENTSCHRIFT

(45) Veröffentlichungstag der Patentschrift:
16.05.84

(51) Int. Cl.³: **C 08 G 65/40**

(21) Anmeldenummer: **78100283.7**

(22) Anmeldetag: **30.06.78**

(54) Verfahren zur Herstellung von Poly(phenylenoxyphenylensulfon).

(30) Priorität: **14.07.77 DE 2731816**

(43) Veröffentlichungstag der Anmeldung:
**24.01.79 Patentblatt 79/2**

(45) Bekanntmachung des Hinweises auf die Patenterteilung:
**16.05.84 Patentblatt 84/20**

(84) Benannte Vertragsstaaten:
**BE DE FR GB NL**

(56) Entgegenhaltungen:
**CA - A - 847 963
DE - A - 1 545 106
DE - A - 1 957 091
DE - A - 2 355 928
FR - A - 2 320 323**

**J. Pol. Sci. part A1, vol 5, 2375-2398 (1967)**

*Die Akte enthält technische Angaben, die nach dem Eingang der Anmeldung eingereicht wurden und die nicht in dieser Patentschrift enthalten sind.*

(73) Patentinhaber: **BASF Aktiengesellschaft,
Carl-Bosch-Strasse 38, D-6700 Ludwigshafen (DE)**

(72) Erfinder: **Blinne, Gerd, Dr., Im Woogtal 7,
D-6719 Bobenheim (DE)**
Erfinder: **Cordes, Claus, Dr., Halbergstrasse 13,
D-6719 Weisenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Polyphenylenoxyphenylensulfon

Die Erfindung betrifft ein Verfahren zur Herstellung von sulfongruppenhaltigen Polyethern.

Polymere mit Sulfon- und Ethergruppen sind bereits bekannt. Nach Angabe der DE-A 15 45 106 und DE-A 17 95 725, sowie nach J. Polym. Science, part AI, vol. 5, Seiten 2375 bis 2398, werden Polysulfonether vorzugsweise durch Umsetzung aromatischer Alkaliphenolate mit aromatischen Halogenverbindungen hergestellt. Nach dem Beispiel 13 der DE-A 15 45 106 wird das Dikaliumsalz von Bis-(4-oxyphenyl)-sulfon mit Bis-(4-chlorphenyl)sulfon in Sulfolan als Lösungsmittel bei 240°C umgesetzt. Bei der Herstellung des Alkalisalzes werden wäßrige Lösungen des Alkalihydroxids zugegeben. Hierbei müssen exakt stöchiometrische Mengen eingehalten werden, da ein Über- oder Unterschuß der Base zu unbefriedigenden Molekulargewichten führt. Außerdem bilden sich aufgrund des anwesenden Wassers häufig große Phenolatagglomerate, die zu erheblichen Störungen bei der Polykondensation führen können.

In der DE-A 19 57 091 sowie in der CA-A 8 47 963 werden die beschriebenen Nachteile teilweise durch Verwendung von wasserfreiem Alkalicarbonat beseitigt. Nach Angaben der DE-OS 19 57 091 werden jedoch die geringen Wassermengen, die sich beim Zerfall des in situ entstehenden Alkalibicarbonates bilden, nicht entfernt. Dadurch ergeben sich ungenügende Molekulargewichte und das Verfahren ist nur mit wenigen ausgewählten Monomeren durchführbar. In der CA-PS 8 47 963 wird dieser Nachteil durch Verwendung eines Lösungsmittels vermieden, das azeotrop mit Wasser abdestilliert. In den Beispielen 11 bis 13 wird 1 Mol Bis-(4-oxyphenyl)-sulfon mit 1 Mol Bis-(4-chlorphenyl)-sulfon in Gegenwart von Kalium- bzw. Natriumcarbonat in Sulfolan als Lösungsmittel umgesetzt. Zum Erreichen befriedigender Molekulargewichte werden hier allerdings relativ hohe Temperaturen von 235°C eingestellt, die zu mehr oder minder verfärbten Produkten führen. Außerdem ist das Verfahren auf wenige, hochsiedende Lösungsmittel beschränkt.

Überraschenderweise wurde nun gefunden, daß man bei niedrigeren Reaktionstemperaturen Polyether mit guter Eigenfarbe und hohem Molekulargewicht erhält, wenn man äquivalente Mengen eines Bisphenols mit einer Dichlorbenzolverbindung in N-Methylpyrrolidon als Lösungsmittel in Gegenwart von wasserfreiem Alkalicarbonat stufenweise umsetzt.

Gegenstand der Erfindung ist daher ein Verfahren zur Herstellung von Polyethern durch Umsetzung von äquivalenten Mengen Bis-(4-oxyphenyl)-sulfon mit Bis-(4-chlorphenyl)-sulfon in N-Methylpyrrolidon als Lösungsmittel in Gegenwart von wasserfreiem Alkalicarbonat, bei dem

a)  in einer ersten Reaktionsstufe eine Lösung des Bisphenols mit der Dichlorbenzolverbindung in Gegenwart von 1 bis 2, vorzugsweise 1,0 bis 1,2 Mol wasserfreiem Alkalicarbonat und eines Wasser-Azeotropbildners bis zur Abtrennung von mindestens 90 Gew.-%, bezogen auf das Gesamtgewicht, der theoretisch möglichen Wassermenge bei Temperaturen von 100°C bis 170°C, vorzugsweise 120°C bis 150°C umgesetzt wird,

b)  in einer Reaktionsstufe des Reaktionsgemisch bei Temperaturen von 170°C bis 200°C mit weiterem Azeotropbildner versetzt und gleichzeitig das entstehende azeotrope Gemisch bis zur völligen Wasserfreiheit abdestilliert wird,

c)  in einer dritten Reaktionsstufe das Reaktionsgemisch bei Temperaturen von 170°C bis 230°C bis zu einer reduzierten Viskosität von 0,4 bis 1,5 polykondensiert und anschließend die Polymerisation durch Zugabe von Methylchlorid abgestoppt wird, und

d)  der entstehende Polyether durch an sich bekannte Maßnahmen von Lösungsmitteln und anorganischen Bestandteilen abgetrennt wird.

Die reduzierten Viskositäten ($\eta_{red}$) werden bei 24°C in 1%iger Schwefelsäurelösung gemessen. Sie werden nach folgender Formel bestimmt:

$$\eta_{red} = \frac{\eta_{spez}}{c}.$$

Dabei ist $\eta_{spez}$ die spezifische Viskosität des Polymeren und c ist die Konzentration des Polymeren im Lösungsmittel in g/100 ml.

In der FR-A 23 20 323 wird ein Polyether hergestellt durch Umsetzung von Bis-(4-chlorphenylsulfon) mit 3,3′,5,5′-Tetramethyl-4,4′-dihydroxybiphenyl in Gegenwart von Alkalicarbonat in einem dipolaren aprotischen Lösungsmittel. Dabei wird ebenfalls in vier Reaktionsstufen gearbeitet, allerdings darf in der Stufe b) die Temperatur 170°C, vorzugsweise 160°C nicht übersteigen.

Als polares aprotisches Lösungsmittel wird N-Methylpyrrolidon verwendet. Es wird in Mengen von 5 bis 100, vorzugsweise von 10 bis 20 Molen, bezogen auf ein Mol Bisphenol oder Dichlorbenzolverbindung, verwendet. Dies bedeutet, daß die Reaktionslösungen in Abwesenheit von Alkalicarbonat und Azeotropbildner einen Feststoffgehalt von 5 bis 50 Gew.-%, vorzugsweise von 20 bis 35 Gew.-%, bezogen auf das Gesamtgewicht, aufweisen.

Als wasserfreie Alkalicarbonate kommen beispielsweise Natrium- und vorzugsweise Kaliumcarbonat in Betracht. Zur Neutralisation des bei der Polykondensation entstehenden Chlorwasserstoffs werden pro Mol Bisphenol und Dichlorbenzolverbindung 1 bis 2, vorzugsweise 1,0 bis 1,2 Mol wasserfreies Alkalicarbonat eingesetzt.

Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol und Xylol.

Bevorzugt zur Anwendung gelangt Chlorbenzol.

Die Azeotropbildner werden in solchen Mengen verwendet, daß die quantitative Abtrennung des bei der Neutralisation von Chlorwasserstoff und Alkalicarbonat entstehenden Wassers gewährleistet wird.

Da die Wasserabtrennung in üblichen Vorrichtungen, beispielsweise Wasserabscheidern verschiedener Art, durchgeführt werden kann, wobei der Azeotropbildner gegebenenfalls ständig im Kreislauf geführt werden kann, ist die benötigte Azeotropbildnermenge auch von der Art und Größe der Vorrichtung abhängig. Die erforderliche Menge kann jedoch auf einfache Weise experimentiell bestimmt werden.

Sofern der Azeotropbildner nicht im Kreislauf geführt wird, hat es sich als zweckmäßig erwiesen, pro Mol Alkalicarbonat in der ersten Reaktionsstufe ungefähr 2 bis 10 Mol Azeotropbildner zu verwenden.

Zur Durchführung des erfindungsgemäßen Verfahrens wird die Reaktionsmischung in der ersten Reaktionsstufe bis zur Abtrennung von mindestens 90 Gew.-%, vorzugsweise 90 bis 96 Gew.-%, bezogen auf das Gesamtgewicht, der theoretisch möglichen Wassermenge vorteilhafterweise 0,5 bis 4 Stunden, vorzugsweise 1 bis 2 Stunden, erhitzt.

Die Reaktionszeit in der dritten Stufe zur Polykondensation bis zu einer reduzierten Viskosität von 0,4 bis 1,5, vorzugsweise 0,50 bis 1,2, des Polyethers beträgt ungefähr 3 bis 12 Stunden, vorzugsweise 4 bis 8 Stunden. Danach wird die Polykondensation durch Einleiten von Methylchlorid abgestoppt. Die Reaktionszeit hierfür beträgt ungefähr 0,1 bis 2, vorzugsweise 0,2 bis 0,5 Stunden.

Die Isolierung des Polyethers in der vierten Stufe schließlich kann durch Mischung der Reaktionslösung mit einem Fällungsmittel, z. B. Wasser und/oder Methanol, durch starkes Rühren, Verspritzen oder Verdüsen geschehen. Andererseits kann das Lösungsmittel auch verdampft werden. Die anorganischen Bestandteile können durch geeignete Methoden wie Lösen, Filtrieren oder Sieben aus dem Polyether entfernt werden.

Die mit Hilfe des erfindungsgemäßen Verfahrens hergestellten Polyether besitzen reduzierte Viskositäten (gemessen bei 24°C in 1%iger Schwefelsäurelösung) von 0,4 bis 1,5. Dies entspricht Molekulargewichten von 15 000 bis 120 000. Die hergestellten Polyether sind vorzüglich zur Herstellung von Formkörpern, Fasern, Folien, Kleb- und Beschichtungsstoffen geeignet.

Die Farbbeurteilung der Polyether wurde durch UV-Messung an 1%igen Schwefelsäurelösungen durchgeführt. Dazu wurde die Lichtdurchlässigkeit der Lösung im Bereich von 400 bis 800 m$\mu$ in Intervallen von 50 m$\mu$ gemessen und daraus die durchschnittliche Durchlässigkeit berechnet.

## Beispiel 1

150,2 Teile Bis(4-oxyphenyl-)sulfon und 172,3 Teile Bis-(4-chlorphenyl-)sulfon werden in 900 Teilen N-Methylpyrrolidon und 300 Teilen Chlorbenzol gelöst und mit 87,2 Teilen wasserfreiem Kaliumcarbonat versetzt. Das Reaktionsgemisch wird unter ständigem Abdestillieren eines Gemisches aus Wasser und Chlorbenzol innerhalb von zwei Stunden auf 150°C erhitzt. Anschließend wird die Temperatur auf 180°C gesteigert. Innerhalb weiterer zwei Stunden werden nochmals 300 Teile Chlorbenzol zugetropft, die sofort wieder azeotrop abdestillieren. Das Reaktionsgemisch wird dann 6 Stunden bei 180°C bis zu einer reduzierten Viskosität von 0,6 gehalten. Durch 30minütiges Einleiten eines Methylchlorid-Stromes wird die Polykondensation abgebrochen. Die anorganischen Bestandteile werden nach Zugabe von 600 ml Chlorbenzol abfiltriert, das Polymere in Wasser ausgefällt und 12 Stunden bei 80°C im Vakuum getrocknet. Es besitzt eine reduzierte Viskosität von $\eta_{red} = 0,60$ und eine durchschnittliche Lichtdurchlässigkeit von 3,4%.

## Beispiel 2

Verfährt man analog den Angaben von Beispiel 1, verwendet jedoch anstelle des Kaliumcarbonats 66,8 Teile wasserfreies Natriumcarbonat, so erhält man einen Polyether mit einer reduzierten Viskosität von $\eta_{red} = 0,45$ und einer durchschnittlichen Lichtdurchlässigkeit von 3,7%.

## Vergleichsbeispiel A

Die Polykondensation wird analog Beispiel 1, jedoch in Abwesenheit des Chlorbenzols durchgeführt. Man erhält einen Polyether der reduzierten Viskosität $\eta_{red} = 0,25$ mit einer durchschnittlichen Absorption von 6,1%.

## Vergleichsbeispiel B

Die Polykondensation wird entsprechend Beispiel 1, jedoch unter Verwendung von 900 Teilen Tetramethylensulfon (Sulfolan) anstelle des N-Methylpyrrolidons als Lösungsmittel durchgeführt. Ferner wird das Reaktionsgemisch in der dritten Reaktionsstufe 6 Stunden bei 235°C polykondensiert. Das erhaltene Polymere besitzt eine reduzierte Viskosität von $\eta_{red} = 0,50$ und eine durchschnittliche Absorption von 14,5%.

### Vergleichsbeispiel C

Man verfährt analog den Angaben des Beispiels 1, setzt jedoch das gesamte Chlorbenzol (600 Teile) dem Reaktionsgemisch bereits zu Beginn der Polykondensation hinzu und führt die Reaktion bei 180°C unter azeotroper Destillation zu Ende. Man erhält ein Oligomeres mit einer reduzierten Viskosität von $\eta_{red} = 0,10$ und einer durchschnittlichen Absorption von 5,8%.

**Patentanspruch**

Verfahren zur Herstellung von Polyethern durch Umsetzung von äquivalenten Mengen einer Bis-(4-oxyphenyl)-Verbindung mit Bis-(4-chlorphenyl)sulfon in einem polaren, aprotischen Lösungsmittel in Gegenwart von wasserfreiem Alkalicarbonat, wobei

a)   in einer ersten Reaktionsstufe eine Lösung des Bisphenols mit der Dichlorbenzolverbindung in Gegenwart von 1 bis 2 Mol wasserfreiem Alkalicarbonat und eines wasserfreien Alkalicarbonat und eines Wasser-Azeotropbildners bis zur Abtrennung von mindestens 90 Gew.-%, bezogen auf das Gesamtgewicht, der theoretisch möglichen Wassermenge bei Temperaturen von 100°C bis 170°C umgesetzt wird,

b)   in einer zweiten Reaktionsstufe das Reaktionsgemisch mit weiterem Azeotropbildner versetzt und gleichzeitig das entstehende azeotrope Gemisch bis zur völligen Wasserfreiheit abdestilliert wird,

c)   in einer dritten Reaktionsstufe das Reaktionsgemisch zu einer reduzierten Viskosität von 0,4 bis 1,5 polykondensiert und anschließend die Polymerisation durch Zugabe von Methylchlorid abgestoppt wird, und

d)   der entstandene Polyether von Lösungsmitteln und anorganischen Bestandteilen abgetrennt wird,

dadurch gekennzeichnet, daß Bis-(4-oxyphenyl)-sulfon mit Bis-(4-chlorphenyl)sulfon umgesetzt wird, als Lösungsmittel N-Methylpyrrolidon verwendet wird und die Temperatur in den Stufen b) und c) mindestens 170°C beträgt und in Stufe b) 200°C und in Stufe c) 230°C nicht übersteigt.

**Claim**

A process for the manufacture of polyethers by reacting equivalent amounts of a bis-(4-hydroxyphenyl)-sulfone compound and bis-(4-chlorophenyl)-sulfone in a polar aprotic solvent in the presence of an anhydrous alkali metal carbonate, wherein

a)   in a first stage of the reaction, a solution of the bisphenol is reacted with the dichlorobenzene compound in the presence of from 1 to 2 moles of an anhydrous alkali metal carbonate and in the presence of a compound which forms an azeotrope with water, at a temperature of from 100°C to 170°C, until at least 90% of the amount of water which can theoretically be formed has been removed,

b)   in a second stage of the reaction, further amounts of a compound which forms an azeotrope are added to the reaction mixture, and at the same time the azeotropic mixture formed is distilled off until the reaction mixture is completely anhydrous,

c)   in a third stage of the reaction, the reaction mixture is polycondensed until its reduced viscosity is from 0,4 to 1,5, and the polymerization is then stopped by adding methyl chloride, and

d)   the polyether formed is separated from the solvents and inorganic constituents,

wherein bis-(4-hydroxyphenyl)-sulfone is reacted with bis-(4-chlorophenyl)-sulfone, N-methylpyrrolidone is used as solvent, and the temperature in stages b) and c) is at least 170°C and does not exceed 200°C and 230°C in stages b) and c) respectively.

**Revendication**

Procédé de préparation de poly-éthers par réaction de quantités équivalentes d'un dérivé de bis-(4-oxyphényl)-sulfone et de bis-(4-chlorophényl)-sulfone dans un solvant aprotique polaire en présence d'un carbonate de métal alcalin anhydre, dans lequel:

a)   on fait réagir, dans un premier stade opératoire, une solution du bis-phénol et le dérivé de dichloro-benzène à des températures de 100 à 170°C, en présence de 1 à 2 moles d'un carbonate de métal alcalin anhydre et d'un composé formant avec l'eau un mélange azéotrope jusqu'à l'élimination d'au moins 90% en poids, par rapport au poids total, de la quantité d'eau théoriquement éliminable;

b)   on ajoute, dans un deuxième stade opératoire, une quantité supplémentaire de composé formant un mélange azéotrope et élimine simultanément le mélange azéotrope qui se forme jusqu'à l'élimination complète de l'eau;

c)   on polycondense, dans un troisième stade opératoire, le mélange réactionnel jusqu'à une viscosité réduite de 0,4 à 1,5, puis on bloque la polymérisation par addition de chlorure de méthyle, et

d)   on sépare le poly-éther formé des solvants et des ingrédients inorganiques,

caractérisé en ce que l'on fait réagir la bis-(4-oxyphényl)-sulfone et la bis-(4-chlorophényl)-sulfone dans la N-méthyl-pyrrolidone comme solvant, la température étant d'au moins 170°C dans les stades b) et c) sans dépasser 200°C dans le stade b), ni 230°C dans le stade c).